# EUROPÄISCHE PATENTSCHRIFT

(11) **EP 2 922 386 B1**
(45) Veröffentlichungstag und Bekanntmachung des Hinweises auf die Patenterteilung: **29.03.2017**
(21) Anmeldenummer: 13771154.5
(22) Anmeldetag: 02.10.2013
(51) Int. Cl.: A01F 12/40, A01F 29/04, A01D 41/12

(54) **HÄCKSELVORRICHTUNG**
CHOPPING DEVICE
HACHE-PAILLE

(30) Priorität: 10.10.2012 DE 202012103876 U
(43) Veröffentlichungstag der Anmeldung: 30.09.2015
(73) Patentinhaber: Rasspe Systemtechnik GmbH & Co. KG, 42929 Wermelskirchen (DE)
(72) Erfinder: SCHUMACHER, Friedrich-Wilhelm, 57612 Birnbach (DE); SCHUMACHER, Heinrich, Günter, 57612 Eichelhardt (DE); FLANHARDT, Michael, 40764 Langenfeld (DE); ACIMAS, Andreas, 42699 Solingen (DE); KORN, Christian, 07922 Tanna (DE)
(74) Vertreter: Neumann Müller Oberwalleney & Partner Patentanwälte
(86) Internationale Anmeldenummer: PCT/EP2013/070516
(87) Internationale Veröffentlichungsnummer: WO 2014/056774

(56) Entgegenhaltungen:
- EP-B1- 1 219 163
- DE-A1- 2 529 019
- DE-A1- 19 753 486
- DE-B3- 10 350 123
- US-A1- 2003 109 293

## Beschreibung

Die Erfindung betrifft eine Häckselvorrichtung mit einem Gehäuse, mit mindestens einem Einlass und mindestens einem Auslass für Häckselgut. Mindestens eine Häckseltrommel ist im Gehäuse um eine vertikale oder relativ zu einer Vertikalen geneigten Trommelachsen drehbar aufgenommen, wobei die mindestens eine Häckseltrommel in Richtung der Trommelachse nach oben konisch verjüngend ausgebildet ist. Häckselmesser sind an der mindestens einen Häckseltrommel über den Umfang und über die Höhe der mindestens einen Häckseltrommel verteilt angeordnet. Das Gehäuse ist zumindest teilweise an die mindestens eine Häckseltrommel angepasst vertikal noch oben verjüngend ausgebildet.

Eine solche Häckselvorrichtung ist in der EP 1 219 163 B1 gezeigt, welche ein im Wesentlichen zylindrisches Gehäuse aufweist, wobei das Häckselgut ebenfalls axial von oben, aber etwas seitlich versetzt zur Trommelachse, zugeführt wird. Aufgrund der konusförmigen Häckseltrommel und dem diese umgebenden zylindrischen Gehäuses ergibt sich ein über den gesamten Umfang der Häckseltrommel verlaufender Spalt zwischen Häckseltrommel und Gehäuse, der sich von unten nach oben trichterförmig erweitert, wobei das Häckselgut unmittelbar über die gesamte Höhe der Häckseltrommel zugeführt wird. Aufgrund des Spalts zwischen der Häckseltrommel und dem Gehäuse ergibt sich ein Freiraum, in dem sich Häckselgut befinden kann, ohne dass dieses im Wirkungsbereich der Häckselmesser ist, wodurch sich die Häckselwirkung verringert. Die Breitenverteilung des Häckselgutes auf dem Feld wird dadurch erzielt, dass das Gehäuse um eine vertikale Achse schwenkbar ist.

Eine ähnliche Häckselvorrichtung zeigt DE 103 50 123 B3, wobei hier das Häckselgut radial von der Seite den Häckseltrommeln zugeführt wird. Die Verteilung des EP 13771154.5

Häckselgutes auf dem Feld erfolgt mittels eines separaten Gebläses.

US 2003/109293 A1 zeigt eine Häckselvorrichtung mit zwei Häckseltrommeln, die um vertikale Drehachsen drehbar sind. Für die Verteilung von Häckselgut ist ein Leitblech für den Auslass vorgesehen. Das Leitblech ist in vertikaler Richtung gestuft ausgebildet.

Aufgabe der vorliegenden Erfindung ist es, eine Häckselvorrichtung bereitzustellen, die eine verbesserte Auswurfcharakteristik, insbesondere Breitenverteilung des Häckselguts aufweist.

Die Erfindung wird durch eine Häckselvorrichtung gelöst, welche ein Gehäuse, mit mindestens einem Einlass und mindestens einem Auslass für Häckselgut, mindestens eine Häckseltrommel, die im Gehäuse um eine vertikale oder relativ zu einer Vertikalen geneigten Trommelachse drehbar aufgenommen ist und die in Richtung der Trommelachse nach oben konisch verjüngend ausgebildet ist, sowie Häckselmesser, die an der mindestens einen Häckseltrommel über den Umfang und über die Höhe der mindestens einen Häckseltrommel verteilt angeordnet sind, aufweist. Das Gehäuse ist zumindest teilweise an die mindestens eine Häckseltrommel angepasst vertikal noch oben verjüngend ausgebildet. Der mindestens eine Auslass weist eine Auslassöffnung auf, die in mehrere ineinander übergehende Teilauslassöffnungen zur verbesserten Auswurfcharakteristik, insbesondere Breitenverteilung, aufgeteilt ist.

Vorzugsweise sind die Teilauslassöffnungen übereinander und, bezogen auf die Trommelachse der mindestens einen Häckseltrommel, in Umfangsrichtung zueinander versetzt angeordnet. Somit wird je nach Höhe das Häckselgut in unterschiedliche Richtungen ausgeworfen, was zu einer großen und gleichmäßigen Breitenverteilung führt. Zudem wird durch die versetzte, stufenförmige Anordnung der Teilauslassöffnungen, innerhalb derer das geschnittene Häckselgut geleitet wird, wird das Häckselgut stetig in gleichmäßiger Breite, Dicke und Dichte bei ununterbrochener Häckselgutzufuhr auf dem Feldboden abgelegt.

Um zum Beispiel Seitenwindeinflüssen im Einsatz an einer landwirtschaftlichen Erntemaschine entgegenzuwirken, kann jeder Teilauslassöffnung ein einstellbares Leitblech zur Einstellung der seitlichen Auswurfrichtung des Häckselguts zugeordnet sein. Die Leitbleche können hierbei zur festen Einstellung der Breite und der Richtung des Auswurfs manuell einstellbar sein. Es ist jedoch auch eine automatische Einstellung über Aktuatoren, wie z.B. Stellmotoren, denkbar.

Die Häckselvorrichtung kann als Anbaugerät für eine landwirtschaftliche Arbeitsmaschine, wie beispielsweise einen Mähdrescher, ausgeführt sein. Ebenso ist es denkbar, dass die Häckselvorrichtung als eigenständiges z.B. gezogenes Gerät ausgebildet ist. Häckselvorrichtungen können jedoch auch in anderen Bereichen außerhalb der Landwirtschaft eingesetzt werden, wie z.B. im Recyclingbereich.

Durch die Anpassung des Gehäuses an die sich verjüngende Form (Konusform) der Häckseltrommeln wird eine hohe Häckselwirkung erzielt, insbesondere wenn in diesen Bereichen des Gehäuses Gegenmesser angeordnet sind, die mit den Häckselmessern der Häckseltrommel zusammenwirken.

Vorzugsweise ist vorgesehen, dass der Einlass derart gestaltet ist, dass das Häckselgut bezogen auf die Höhe der mindestens einen Häckseltrommel zumindest einer Mehrzahl der Häckselmesser zugeführt wird.

Im Bereich des Einlasses ist die Gestaltung des Gehäuses an eine optimale Zuführung des Häckselgutes angepasst, d.h. dass das Häckselgut über die gesamte Höhe, bezogen auf die Häckselmesser, der Häckseltrommel Häckselgut zugeführt wird und somit das Häckselgut gleichmäßig über alle Häckselmesser verteilt wird. Das Häckselgut muss nicht zwingend über die gesamte Höhe der Häckseltrommel zugeführt werden, sondern nur über den Bereich, in dem Häckselmesser vorgesehen sind, also über die gesamte Höhe, bezogen auf die Häckselmesser. Hierdurch wird eine gleichmäßige Häckselwirkung erzielt. Ferner wird bei Auslässen, die sich, bezogen auf die Höhe der mindestens einen Häckseltrommel, über alle Häckselmesser erstreckt, eine gleichmäßige Verteilung des Häckselguts erzielt. Dies trifft insbesondere dann zu, wenn die tangentiale Auswurfrichtung des Häckselgutes über die Höhe der Häckseltrommel unterschiedlich ist.

Bei einer bevorzugten Ausführungsform sind zwei Häckseltrommeln vorgesehen, die im Gehäuse drehbar angeordnet sind. Prinzipiell ist es jedoch auch denkbar, dass zwei separate Häckselvorrichtungen vorgesehen sind, die gemeinsam betrieben werden und ggf. sogar über einen gemeinsamen Antrieb angetrieben werden.

Sofern die beiden Häckseltrommeln in einem gemeinsamen Gehäuse angeordnet sind, kann eine Trennwand zwischen den beiden Häckseltrommeln im Gehäuse vorgesehen sein, wobei vorzugsweise die Trennwand zur Verteilung des Häckselgutstroms auf die beiden Häckseltrommeln verstellbar ist.

Hierbei kann der Einlass derart gestaltet sein, dass er beide Häckseltrommeln übergreift, d.h., dass beide Häckseltrommeln vom selben ursprünglichen Häckselgutstrom beschickt werden. Die Häckseltrommeln sind zudem gegensinnig drehend angetrieben, wenn das Häckselgut auf beide Häckseltrommeln verteilt wird.

Je Häckseltrommel kann ein Auslass vorgesehen sein. Eine gute Verteilung des Häckselgutes wird dadurch erreicht, dass sich der mindestens eine Auslass bezogen auf die Höhe der zumindest einen Häckseltrommel über alle Häckselmesser erstreckt.

Bei einer bevorzugten Ausführungsform ist vorgesehen, dass die Trommelachsen bezogen auf eine Fahrtrichtung, entlang der die Häckselvorrichtung, z.B. mittels einer Erntemaschine, bewegt wird, nach hinten geneigt angeordnet sind. Somit wird das Häckselgut nach unten auf den Boden gerichtet ausgeworfen.

Vorzugsweise befinden sich der mindestens eine Einlass und der mindestens eine Auslass auf entgegen gesetzten Seiten des Gehäuses.

Eine bevorzugte Ausführung sieht vor, dass die mindestens eine Häckseltrommel einen Trommelkörper aufweist, an dessen Außenfläche die Häckselmesser, vorzugsweise über Messerhalter, die auf dem Trommelkörper angeordnet sind, befestigt sind. Die Häckselmesser können dabei starr und unbeweglich am Trommelkörper befestigt sein. Sie können aber auch jeweils parallel zur Trommelachse schwenkbar am Trommelkörper in der Art eines Schlegels befestig sein.

Um eine möglichst hohe Stabilität des Trommelkörpers zu erzielen, kann dieser ein polygonales Querschnittsprofil aufweisen. Vorteilhafterweise ist das Querschnittsprofil in Form eines gleichmäßigen Polygons, z.B. in Form eines Hexagons, gestaltet. Im Längsschnitt weist der Trommelkörper somit ein dreieckförmiges oder trapezförmiges Profil auf. Im Gegensatz zu einer Konusform oder einer Gestaltung des Trommelkörpers in Form eines Konusstumpfes mit rundem Querschnittsprofil, ergeben sich ebene Teilflächen über den Umfang, die an Kanten aneinanderstoßen. Durch diese Kanten ergibt sich eine höhere Stabilität als bei einem runden Querschnitt, wobei selbstverständlich der Einsatz eines Trommelkörpers mit rundem Querschnitt nicht ausgeschlossen ist. Die Polygonform hat zudem den Vorteil, dass sich die Herstellung einfach gestaltet. Der Trommelkörper kann durch eine oder mehrere Bleche hergestellt werden, die in die entsprechende Form umgeformt (gekantet) werden, wobei bei mehreren Blechen diese anschließend miteinander entlang von Kanten verschweißt werden können.

Die Häckselmesser können über Messerhalter an dem Trommelkörper befestigt werden, wobei die Messerhalter an den Kanten des Trommelkörper, die sich aufgrund des polygonalen Querschnittprofils ergeben, angeordnet sind. Die Messerhalter können aus einem sich horizontal angeordneten Blech gefertigt sein, wobei durch die Anordnung auf der Kante die Messerhalter sich in Umfangsrichtung gegen zwei aneinandergrenzende Teilflächen abstützen. Dies führt zu einer erheblichen Stabilitätserhöhung.

Die Häckselmesser zweier benachbarter Kanten können in Richtung der Trommelachse versetzt zueinander angeordnet sein, d.h. auf unterschiedlichen Höhen bzw. horizontalen Ebenen angeordnet sein.

Alternativ kann die Häckseltrommel eine Welle umfassen, an der die radial verlaufenden und von der Welle vorstehenden Häckselmesser angeordnet sind. Die Häckselmesser können hierbei an einem zur Welle hin offenen und an dieser montierten Tragrahmen befestig sein.

In dem Gehäuse können Gegenmesser vorgesehen sein, die mit den Häckselmessern der mindestens einen Häckseltrommel kämmend angeordnet sind. Das Häckselgut wird somit zwischen Häckselmesser und Gegenmesser zerkleinert. Hierbei ist das Gehäuse insbesondere in dem Bereich der Gegenmesser nach oben hin verjüngend ausgebildet und verläuft möglichst parallel zum Längsprofil der Häckseltrommel.

Die Gegenmesser können verstellbar am Gehäuse angeordnet sein, vorzugsweise gemeinsam über einen Gegenmesserhalter, an dem die Gegenmesser befestigt sind und der verstellbar am Gehäuse befestigt ist. Somit lässt sich der Grad der Überlappung in axialer Richtung gesehen zwischen den Gegenmessern und den Häckselmessern variieren. Die Gegenmesser können vorzugsweise auch vollständig aus dem Gehäuse verstellt werden, so dass der Schnitt des Häckselgutes alleine durch die rotierenden Häckselmesser erzielt wird. Zum Verstellen der Gegenmesser können im Gehäuse Schlitze vorgesehen sein, durch die die Gegenmesser in das Innere des Gehäuses eingesteckt werden können.

Üblicherweise wird die mindestens eine Häckseltrommel über den Hauptantrieb einer landwirtschaftlichen Erntemaschine angetrieben.

Um jedoch hinsichtlich der Häckselcharakteristik, wie z.B. der Häcksellänge, und der Auswurfgeschwindigkeit, über die auch die Breitenverteilung des Häckselgutes beeinflusst werden kann, möglichst flexibel zu steuern, können für jede vorgesehene Häckseltrommel ein separater Antriebsmotor vorgesehen sein. Vorzugsweise sind die Drehzahlen der Häckseltrommeln durch die separaten Antriebsmotoren separat voneinander und ggf. stufenlos einstellbar. Hierdurch kann das in Fahrtrichtung zentriert auf dem Feldboden hinter der Häckselvorrichtung abgelegte Schnittgut je nach Windeinfluss in seiner Lage stabil gehalten werden. Um dies zu erzielen, können Windsensoren zum detektieren der Windrichtung und/oder der Windgeschwindigkeit vorgesehen sein, wobei in Abhängigkeit der Windrichtung und/oder der Windgeschwindigkeit die Drehzahl des Antriebsmotors veränderbar ist. Bei den Antriebsmotoren handelt es sich vorzugsweise um hydraulische oder elektrische Motoren.

Separate Antriebsmotoren lassen sich besonders kompakt in das Gehäuse und/oder in die Häckseltrommeln integrieren, wobei die Antriebmotoren zumindest teilweise in der jeweiligen Häckseltrommel angeordnet sind.

Zum Antreiben der Häckselvorrichtung kann vorgesehen sein, dass die mindestens eine Häckseltrommel über eine um eine horizontal angeordnete Antriebsachse drehend antreibbare Antriebswelle angetrieben ist. Vorzugsweise sind bei dieser Bauart zwei Häckseltrommeln vorgesehen, die im Gehäuse drehbar angeordnet sind, wobei die beiden Häckseltrommeln gemeinsam von der Antriebswelle angetrieben sind. Für den gemeinsamen Antrieb beider Häckseltrommeln sind Winkelgetriebe vorgesehen, über die die horizontale Drehbewegung der Antriebswelle in vertikale Drehbewegungen der Häckseltrommeln überführt werden können.

Hierbei ist es von Vorteil, wenn eine Schwenkeinrichtung vorgesehen ist, mittels der die Häckselvorrichtung um die Antriebsachse schwenkbar an einem weiteren Bauteil, z.B. einer landwirtschaftlichen Erntemaschine, befestigbar ist. Somit kann die Häckselvorrichtung bezüglich des vertikalen Anstellwinkels verstellt werden, um die Auswurfrichtung relativ zum Boden einstellen zu können. Grundsätzlich sei erwähnt, dass im Sinne dieser Erfindung auch dann von vertikalen Trommelachsen gesprochen wird, wenn diese genau genommen winklig bzw. geneigt zu einer gedachten Vertikalen angeordnet sind.

Zur einfachen Anbindung an ein weiteres Bauteil, z.B. einer Erntemaschine, kann eine Adaptervorrichtung vorgesehen sein, an der das Gehäuse schwenkbar befestigt ist, wobei die Adaptervorrichtung zur Befestigung der Häckselvorrichtung an dem weiteren Bauteil dient. Somit kann z.B. durch verschiedene Varianten der Adaptervorrichtung eine Anpassung des Gehäuses an verschiedene Erntemaschinen entfallen.

In der Adaptervorrichtung kann zumindest eine Leitklappe vorgesehen sein, die die Menge des Häckselguts, die dem mindestens einen Einlass zugeführt wird, steuert. Hierdurch kann auch bei einem variierenden Häckselgutstrom, der z.B. durch eine Erntemaschine der Häckselvorrichtung zugeführt wird, ein gleichmäßiger Häckselgutstrom innerhalb der Häckselvorrichtung erzielt werden, wodurch auch die Verteilung des Häckselguts auf dem Feld gleichmäßiger wird. Die Leitklappe kann zudem dazu dienen, den Häckselgutstrom derart umzulenken, dass dieser nicht den Häckseltrommeln zugeführt wird, sondern z.B. im Schwad auf einem Feld abgelegt wird.

Ein bevorzugtes Ausführungsbeispiel ist im folgenden anhand der Zeichnungen näher erläutert. Hierin zeigt:
- Figur 1: eine Seitenansicht eines Mähdrescherhecks mit einer Häckselvorrichtung,
- Figur 2: eine perspektivische Explosionsdarstellung der Häckselvorrichtung gemäß Figur 1 und einer Adaptervorrichtung,
- Figur 3: eine perspektivische Ansicht einer Vorderseite der Häckselvorrichtung gemäß Figur 1,
- Figur 4: eine perspektivische Ansicht einer Rückseite der Häckselvorrichtung gemäß Figur 3,
- Figur 5: eine teilweise geschnittene perspektivische Ansicht des Gehäuses der Häckselvorrichtung gemäß Figur 1 und
- Figur 6: eine perspektivische Ansicht einer Häckseltrommel.

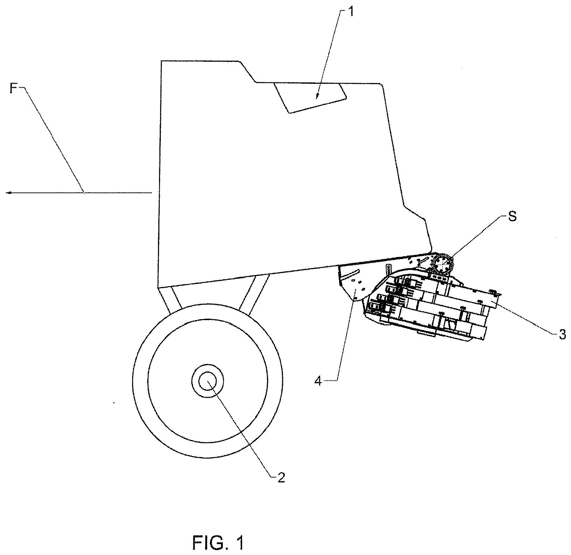

Figur 1 zeigt das Heck eines Mähdreschers 1, wobei die Fahrtrichtung des Mähdreschers 1 durch den Pfeil F gezeigt ist. Der Mähdrescher 1 ist lediglich im Bereich seiner Hinterachse 2 gezeigt. Hinter der Hinterachse 2 ist eine Häckselvorrichtung 3 vorgesehen, die über eine Adaptervorrichtung 4 am Heck des Mähdreschers 1 befestigt ist. Hierbei ist der Adapter 4 mit dem Mähdrescher 1 verbunden und die Häckselvorrichtung 3 an dem Adapter 4. Die Häckselvorrichtung 3 ist um eine horizontal angeordnete Schwenkachse S schwenkbar gegenüber der Adaptervorrichtung 4 und somit gegenüber dem Mähdrescher 1 verstellbar. Das Häckselgut, das der Häckselvorrichtung 3 vom Mähdrescher 1 zugeführt wird, kann durch Verstellen der Häckselvorrichtung 3 um die Schwenkachse S, welche horizontal und quer zur Fahrtrichtung F angeordnet ist, unterschiedlich hoch entgegen der Fahrtrichtung F ausgestoßen werden.

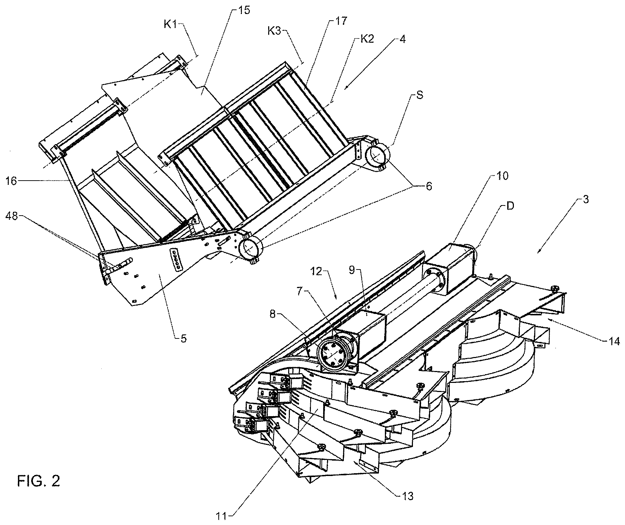

Figur 2 zeigt die Häckselvorrichtung 3 und die Adaptervorrichtung 4 in einer Explosionsdarstellung. Die Adaptervorrichtung 4 umfasst einen Rahmen 5, der an dem Heck des Mähdreschers 1 befestigt wird. Durch den Rahmen 5 wird das Häckselgut vom Mähdrescher 1 hindurchgeführt und der Häckselvorrichtung 3 zugeführt. An dem Rahmen 5 sind zwei Schwenklageraufnahmen 6 vorgesehen, die jeweils einen Schwenklagerzapfen 7 der Häckselvorrichtung 3 schwenkbar aufnehmen. Die Schwenklagerzapfen 7 sind als Hülsen gestaltet, die eine Antriebswelle 8 zum Antreiben von später noch näher erläuterten Häckseltrommeln aufnehmen. Die Antriebswelle 8 ist um eine Antriebsachse D drehbar gelagert, wobei im montierten Zustand die Antriebsachse D und die Schwenkachse S aufeinander liegen. Die Antriebswelle 8 ist mit zwei Winkelgetrieben 9, 10 verbunden, um die horizontale Drehbewegung in vertikale Drehbewegungen zum Antreiben der Häckseltrommeln umzuwandeln.

Die Antriebswelle 8 und die Winkelgetriebe 9, 10 sind oben auf einem Gehäuse 11 der Häckselvorrichtung 3 befestigt. Das Gehäuse 11 dient zur Aufnahme zweier Häckseltrommeln. Es weist ferner einen Einlass 12 auf, der derart mit dem Rahmen 5 der Adaptervorrichtung 4 fluchtet, dass ein Häckselgutstrom von dem Mähdrescher 1 über die Adaptervorrichtung 4 durch den Einlass 12 in das Gehäuse 11 geleitet werden kann. Ferner weist das Gehäuse 11 zwei Auslässe 13, 14 auf, durch die das gehäckselte Häckselgut entgegen der Fahrtrichtung ausgestoßen werden kann.

Die Adaptervorrichtung 4 weist Einrichtungen zum Leiten und Aufteilen des Häckselgutstroms auf die beiden Häckseltrommeln auf. Die Adaptervorrichtung 4 weist hierzu eine Trennwand 15 auf, die den Häckselgutstrom in zwei Teilströme aufteilt, die jeweils einer der Häckseltrommeln zugeführt werden. In Fahrtrichtung betrachtet, befindet sich eine der Häckseltrommeln links von der Trennwand 15 und die andere der beiden Häckseltrommeln rechts von der Trennwand 15.

Ferner gibt es in Fahrtrichtung vorne eine erste Leitklappe 16 und in Fahrtrichtung hinten eine zweite Leitklappe 17, die schwenkbar an dem Rahmen 5 befestigt sind. Die erste Leitklappe 16 ist um eine erste Klappenachse K₁ schwenkbar, wobei die erste Klappenachse K₁ parallel zur Schwenkachse S und somit horizontal und quer zur Fahrtrichtung angeordnet ist. Die erste Leitklappe 16 ist an einem oberen Ende um die erste Klappenachse K₁ schwenkbar, so dass der untere Teil der ersten Leitklappe 16 den Durchflussquerschnitt vergrößern und verkleinern kann. Ferner ist die erste Leitklappe 16 um eine an einem unteren Ende der ersten Leitklappe 16 angeordnete zweite Klappenachse K₂ schwenkbar, so dass das obere Ende der ersten Leitklappe 16 in Fahrtrichtung nach hinten geklappt werden kann, um somit den gesamten Durchflussquerschnitt zu schließen und das Häckselgut nicht der Häckselvorrichtung 3 zuzuführen, sondern an dieser vorbeizuführen, um das Häckselgut im Schwad unmittelbar auf dem Feld abzulegen. Damit die erste Leitklappe 16 sowohl an einem oberen Ende als auch an einem unteren Ende geschwenkt werden kann, ist die erste Leitklappe 16 an ihrem unteren Ende in Führungsnuten 48 im Gehäuse 11 verschiebbar und schwenkbar geführt. Die Führungsnuten 48 verlaufen kreisbogenförmig um die erste Klappenachse K₁. Ferner kann die erste Leitklappe 16 um die zweite Klappenachse K₂ geschwenkt werden, welche entlang der Führungsnuten 48 verschoben werden kann, wenn eine Schwenklagerung (hier nicht dargestellt) an der ersten Klappenachse K₁ gelöst wird.

Ferner ist eine zweite Leitklappe 17 um eine dritte Klappenachse K₃ schwenkbar vorgesehen, wobei die dritte Klappenachse K₃ analog zur ersten Klappenachse K₁ am oberen Ende der zweiten Leitklappe 17 vorgesehen ist, so dass die zweite Leitklappe 17 ebenfalls durch Verschwenken den Durchflussquerschnitt verkleinern und vergrößern kann.

Die Leitklappen 16, 17 sind derart in jeweils zwei Klappenhälften geteilt, dass sie die Trennwand zwischen sich aufnehmen können.

Durch die Verkleinerung und Vergrößerung des Durchflussquerschnitts für das Häckselgut lassen sich Ungleichmäßigkeiten hinsichtlich der Menge des Häckselgutstroms derart ausgleichen, dass der Häckselvorrichtung 3 stets ein konstanter Häckselgutstrom zugeführt wird, um eine möglichst gute Häckselwirkung zu erzielen.

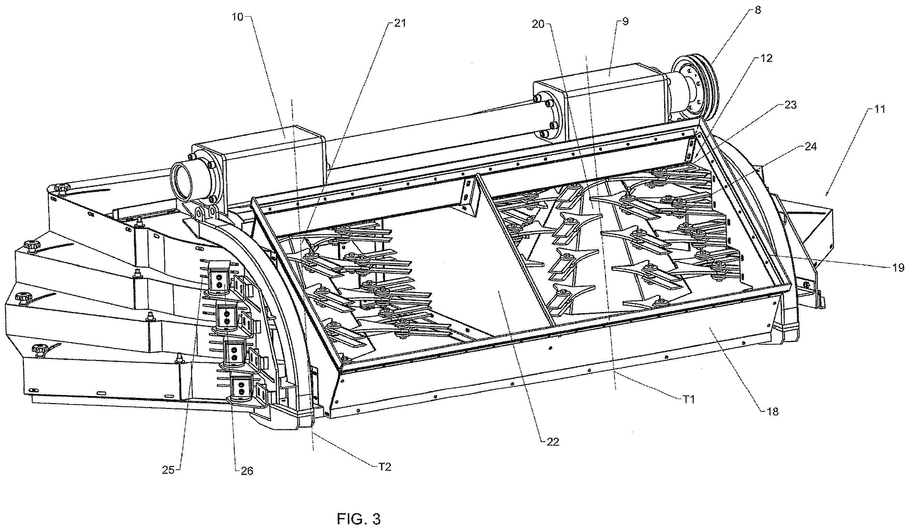

Figur 3 zeigt die Häckselvorrichtung 3 im Bereich des Einlasses 12. Der Einlass 12 ist durch einen kastenförmigen Abschnitt 18 des Gehäuses 11 gebildet, wobei der kastenförmige Abschnitt 18 eine Einlassöffnung 19 in Form eines Rechtecks bildet. Der kastenförmige Abschnitt 18 stellt einen Kanal zum Zuführen des Häckselgutstroms zu den Häckseltrommeln dar. Im Inneren des Gehäuses 11 ist eine erste Häckseltrommel 20 und eine zweite Häckseltrommel 21 drehbar gelagert. Die beiden Häckseltrommeln 20, 21 sind in Fahrtrichtung betrachtet nebeneinander angeordnet, wobei zwischen den beiden Häckseltrommeln 20, 21 eine Trennwand 22 im Gehäuse 11 vorgesehen ist. Die erste Häckseltrommel 20 ist um eine erste Trommelachse T₁ und die zweite Häckseltrommel 21 um eine zweite Trommelachse T₂ drehbar gelagert, wobei die beiden Trommelachsen T₁, T₂ vertikal ausgerichtet sind. Im vorliegenden Fall sind die beiden Trommelachsen T₁, T₂ parallel zueinander angeordnet. Prinzipiell können die beiden Trommelachsen T₁, T₂ auch derart zueinander angeordnet sein, dass sie einen Winkel zueinander einschließen.

Die beiden Häckseltrommeln 20, 21 tragen jeweils Häckselmesser 23, die radial von der jeweiligen Häckseltrommel 20, 21 vorstehen. Die Häckselmesser 23 kämmen mit Gegenmessern 24, die am Gehäuse 11 vorgesehen sind. Die Gegenmesser 24 sind von außen durch Schlitze 25 in das Innere des Gehäuses 11 hineingeführt. Die Gegenmesser 24 können bezüglich der Eintauchtiefe in das Gehäuse 11 verstellt werden. Hierzu sind Gegenmesserhalter 26 vorgesehen, die ein oder vorzugsweise, wie in Figur 3 dargestellt, mehrere, z.B. drei, Gegenmesser 24 halten. Die Gegenmesserhalter 26 sind zum Verstellen der Eintauchtiefe der Gegenmesser 24 schwenkbar am Gehäuse 11 gelagert. Die Gegenmesserhalter 26 sind hierbei jeweils um eine vertikal angeordnete Achse schwenkbar.

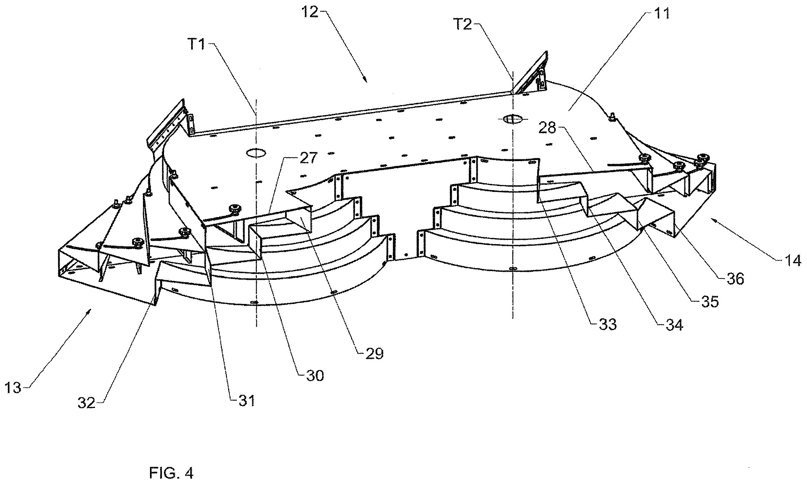

Figur 4 zeigt die Rückseite des Gehäuses 11 mit den Auslässen 13, 14. Die Auslässe 13, 14 sind durch eine erste Auslassöffnung 27 und eine zweite Auslassöffnung 28 des Gehäuses 11 gebildet. Die erste Auslassöffnung 27 umfasst vier Teilauslassöffnungen 29, 30, 31, 32, die jeweils einen rechteckigen Querschnitt aufweisen und übereinander angeordnet sind. Relativ zur ersten Trommelachse T₁ sind die Teilauslassöffnungen 29, 30, 31, 32 über den Umfang versetzt zueinander angeordnet, wobei eine Überlappung vorgesehen ist. Diese Überlappung sorgt dafür, dass alle Teilauslassöffnungen zu einer gemeinsamen Auslassöffnung miteinander verbunden sind. Analog hierzu ist die zweite Auslassöffnung 28 durch Teilauslassöffnungen 33, 34, 35, 36 gebildet, die ebenfalls übereinander angeordnet sind und, bezogen auf die zweite Trommelachse T₂, über den Umfang versetzt zueinander sind. Durch die über den Umfang versetzt zueinander angeordnete Position der einzelnen Teilauslassöffnungen wird eine gute Breitenverteilung des gehäckselten Häckselguts erzielt.

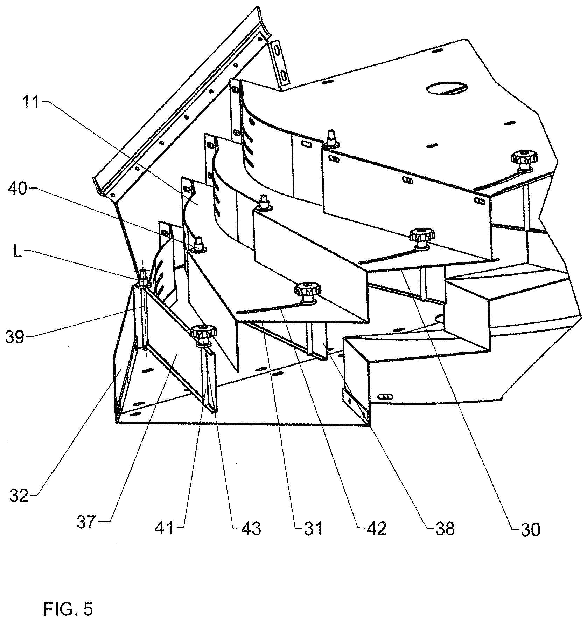

Figur 5 zeigt den Auslass 13 in vergrößerter Darstellung, wobei der Auslass 13 im Bereich der untersten Teilauslassöffnung 36 geschnitten dargestellt ist, so dass man in das Gehäuse 11 hineinsehen kann. Zu erkennen ist, dass innerhalb des Gehäuses jeder Teilauslassöffnung 33, 34, 35, 36 ein Leitblech 37, 38 zugeordnet ist. Das Leitblech 37 zur untersten Teilauslassöffnung 32 wird exemplarisch im folgenden beschrieben. Das Leitblech 37 ist an einem in Fahrtrichtung betrachtet vorderen Ende über Schwenkbolzen 39 in Schwenkhülsen 40, wie sie zu der benachbarten Teilauslassöffnung 31 gezeigt ist, schwenkbar im Gehäuse 11 gelagert. Das Leitblech 37 ist hierbei um eine vertikal angeordnete Leitblechachse L schwenkbar. Das Leitblech 37 ist derart angeordnet, dass es eine Wand des Auslasses 13 darstellt und den Häckselgutstrom seitlich führt. Durch das Verstellen des Leitblechs 37 lässt sich die Richtung des Häckselgutstroms seitlich einstellen. Hierzu weist das Leitblech 37 an einem in Fahrtrichtung betrachtet hinteren Ende einen Führungsbolzen 41 auf, der vertikal nach oben vom Leitblech 37 vorsteht und in einer Führungsnut 42, wie sie zur benachbarten Teilauslassöffnung 31 dargestellt ist, geführt ist. Der Führungsbolzen 41 weist ein Außengewinde auf, auf das eine Feststellmutter 43 aufgeschraubt ist, um das Leitblech 37 in einer der möglichen Positionen festsetzen zu können.

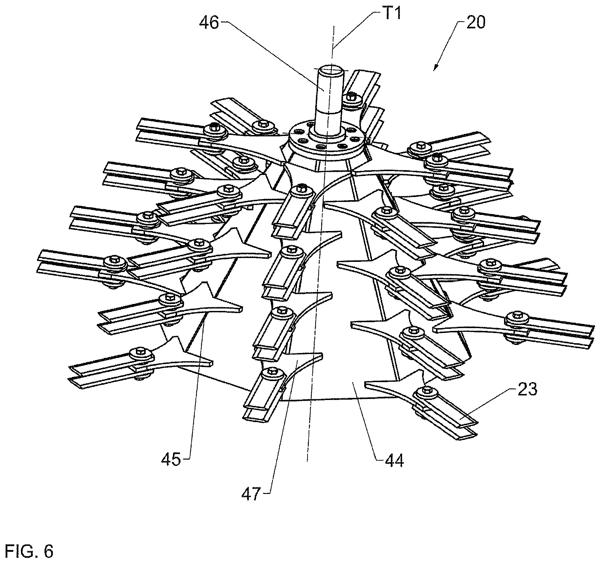

Figur 6 zeigt eine perspektivische Ansicht der ersten Häckseltrommel 20. Diese weist einen zentralen Trommelkörper 44 auf, der im Querschnitt ein polygonales Profil aufweist. Im vorliegenden Fall hat der Trommelkörper ein Profil in Form eines Hexagons. Der Trommelkörper 44 ist ferner derart ausgestaltet, dass er sich vertikal nach oben hin verjüngt. Hierzu ist anzumerken, dass das Gehäuse 11, wie in Figur 4 ersichtlich, ebenfalls an die sich nach vertikal oben hin verjüngende Form der Häckseltrommeln 20, 21 angepasst ist, so dass sich zwischen den Häckselmessern 23 und der Wandung des Gehäuses 11 möglichst wenig Spielraum befindet.

Der Trommelkörper 44 kann aus einzelnen ebenen Metallplatten hergestellt sein, die an Kanten 45 miteinander verschweißt sind. Ebenso können Bleche vorgesehen sein, die an den Kanten umgeformt sind und anschließend miteinander verschweißt sind. Ebenso kann ein einziges Blech derart gekantet werden, dass sich die Grundform des Trommelkörpers 44 ergibt, wobei das Blech entlang einer der Kanten 45 zusammengeschweißt wird.

Entlang der Kanten sind Messerhalter 47 vorgesehen. Diese sind in Form von Blechen gestaltet, welche mit dem Trommelkörper 44 verschweißt sind. Die Messerhalter 47 sind hierbei jeweils auf einer horizontalen gedachten Ebene angeordnet und stützen sich jeweils auf beiden Seiten der Kante 45 an dem Trommelkörper 44 ab, wodurch eine hohe Stabilität erzielt wird. Die Messerhalter 47 zweier benachbarter Kanten 45 sind jeweils in der Höhe versetzt zueinander angeordnet.

Am vertikal oberen Ende weist der Trommelkörper 44 einen Antriebszapfen 46 mit einer Wellenverzahnung auf, über den die Häckseltrommel 44 mit einem der Winkelgetriebe 9 verbunden ist.

### Bezugszeichenliste

- 1: Mähdrescher
- 2: Hinterachse
- 3: Häckselvorrichtung
- 4: Adaptervorrichtung
- 5: Rahmen
- 6: Schwenklageraufnahme
- 7: Schwenklagerzapfen
- 8: Antriebswelle
- 9: Winkelgetriebe
- 10: Winkelgetriebe
- 11: Gehäuse
- 12: Einlass
- 13: Auslass
- 14: Auslass
- 15: Trennwand
- 16: erste Leitklappe
- 17: zweite Leitklappe
- 18: kastenförmiger Abschnitt
- 19: Einlassöffnung
- 20: erste Häckseltrommel
- 21: zweite Häckseltrommel
- 22: Trennwand
- 23: Häcksel messer
- 24: Gegenmesser
- 25: Schlitz
- 26: Gegenmesserhalter
- 27: erste Auslassöffnung
- 28: zweite Auslassöffnung
- 29: Teilauslassöffnung
- 30: Teilauslassöffnung
- 31: Teilauslassöffnung
- 32: Teilauslassöffnung
- 33: Teilauslassöffnung
- 34: Teilauslassöffnung
- 35: Teilauslassöffnung
- 36: Teilauslassöffnung
- 37: Leitblech
- 38: Leitblech
- 39: Schwenkbolzen
- 40: Schwenkhülse
- 41: Führungsbolzen
- 42: Führungsnut
- 43: Feststellmutter
- 44: Trommelkörper
- 45: Kante
- 46: Antriebszapfen
- 47: Messerhalter
- 48: Führungsnut

- D: Antriebsachse
- F: Fahrtrichtung
- K₁: erste Klappenachse
- K₂: zweite Klappenachse
- K₃: dritte Klappenachse
- L: Leitblechachse
- S: Schwenkachse
- T₁: erste Trommelachse
- T₂: zweite Trommelachse

## Patentansprüche

1. Häckselvorrichtung (3) umfassend
ein Gehäuse (11), mit mindestens einem Einlass (12) und mindestens einem Auslass (13, 14) für Häckselgut,
mindestens eine Häckseltrommel (20, 21), die im Gehäuse (11) um eine vertikale oder relativ zu einer Vertikalen geneigten Trommelachse (T₁, T₂) drehbar aufgenommen ist und die in Richtung der Trommelachse (T₁, T₂) nach oben konisch verjüngend ausgebildet ist, sowie
Häckselmesser (23), die an der mindestens einen Häckseltrommel (20, 21) über den Umfang und über die Höhe der mindestens einen Häckseltrommel (20, 21) verteilt angeordnet sind,
wobei das Gehäuse (11) zumindest teilweise an die mindestens eine Häckseltrommel (20, 21) angepasst vertikal noch oben verjüngend ausgebildet ist,
**dadurch gekennzeichnet,**
**dass** der mindestens eine Auslass (13, 14) eine Auslassöffnung (27, 28) aufweist, die in mehrere ineinander übergehende Teilauslassöffnungen (29-36) aufgeteilt ist.

2. Häckselvorrichtung nach Anspruch 1,
**dadurch gekennzeichnet,**
**dass** die Teilauslassöffnungen (29-36) übereinander angeordnet sind und
**dass** die Teilauslassöffnungen (29-36), bezogen auf die Trommelachse (T₁, T₂) der mindestens einen Häckseltrommel (20, 21), in Umfangsrichtung zueinander versetzt angeordnet sind.

3. Häckselvorrichtung nach einem der vorangehenden Ansprüche,
**dadurch gekennzeichnet,**
**dass** jeder Teilauslassöffnung (29-36) ein einstellbares Leitblech (37, 38) zur Einstellung der seitlichen Auswurfrichtung des Häckselguts zugeordnet ist.

4. Häckselvorrichtung nach einem der vorangehenden Ansprüche,
**dadurch gekennzeichnet,**
**dass** der Einlass (12) derart gestaltet ist, dass das Häckselgut bezogen auf die Höhe der mindestens einen Häckseltrommel (20, 21) zumindest einer Mehrzahl der Häckselmesser (23), vorzugsweise allen, zugeführt wird.

5. Häckselvorrichtung nach einem der vorangehenden Ansprüche,
**dadurch gekennzeichnet,**
**dass** zwei Häckseltrommeln (20, 21) vorgesehen sind, die im Gehäuse (11) drehbar angeordnet sind.

6. Häckselvorrichtung nach Anspruch 5,
**dadurch gekennzeichnet,**
**dass** das Gehäuse (11) eine Trennwand (22) zwischen den beiden Häckseltrommeln (20, 21) aufweist.

7. Häckselvorrichtung nach Anspruch 6,
**dadurch gekennzeichnet,**
**dass** die Trennwand (22) zur Verteilung des Häckselgutstroms auf die beiden Häckseltrommeln (20, 21) verstellbar ist.

8. Häckselvorrichtung nach einem der Ansprüche 5 bis 7,
**dadurch gekennzeichnet,**
**dass** der Einlass (12) beide Häckseltrommeln (20, 21) übergreift.

9. Häckselvorrichtung nach einem der vorangehenden Ansprüche,
**dadurch gekennzeichnet,**
**dass** für jede Häckseltrommel (20, 21) ein Auslass (13, 14) vorgesehen ist.

10. Häckselvorrichtung nach einem der vorangehenden Ansprüche,
**dadurch gekennzeichnet,**
**dass** sich der mindestens eine Auslass (13, 14) bezogen auf die Höhe der zumindest einen Häckseltrommel (20, 21) über alle Häckselmesser (23) erstreckt.

11. Häckselvorrichtung nach einem der vorangehenden Ansprüche,
**dadurch gekennzeichnet,**
**dass** die mindestens eine Häckseltrommel (20, 21) einen Trommelkörper (44) aufweist, an dessen Außenfläche die Häckselmesser (23) befestigt sind.

12. Häckselvorrichtung nach Anspruch 11,
**dadurch gekennzeichnet,**
**dass** der Trommelkörper (44) ein polygonales Querschnittsprofil aufweist.

13. Häckselvorrichtung nach Anspruch 12,
**dadurch gekennzeichnet,**
**dass** die Häckselmesser (23) über Messerhalter (47) an dem Trommelkörper (44) befestigt sind, wobei die Messerhalter (47) an Kanten (45) des Trommelkörpers (44), die sich aufgrund des polygonalen Querschnittprofils ergeben, angeordnet sind.

14. Häckselvorrichtung nach einem der vorangehenden Ansprüche,
**dadurch gekennzeichnet,**
**dass** im Gehäuse (11) Gegenmesser (24) vorgesehen sind, die mit dem Häckselmesser (23) der mindestens einen Häckseltrommel (20, 21) kämmend angeordnet sind.

15. Häckselvorrichtung nach einem der vorangehenden Ansprüche,
**dadurch gekennzeichnet,**
**dass** für die mindestens eine Häckseltrommel (20, 21) ein separater Antriebsmotor vorgesehen ist.

16. Häckselvorrichtung nach Anspruch 15,
**dadurch gekennzeichnet,**
**dass** der Antriebsmotor ein hydraulischer oder elektrischer Motor ist.

17. Häckselvorrichtung nach einem der vorangehenden Ansprüche,
**dadurch gekennzeichnet,**
**dass** zwei Häckseltrommeln (20, 21) vorgesehen sind, die im Gehäuse (11) drehbar angeordnet sind und
**dass** eine um eine horizontal angeordnete Antriebsachse (D) drehend antreibbare Antriebswelle (8) vorgesehen ist, über die beide Häckseltrommein (20, 21) angetrieben sind.

18. Häckselvorrichtung nach Anspruch 17,
**dadurch gekennzeichnet,**
**dass** die Antriebswelle (8) über den Häckseltrommeln (20, 21) angeordnet ist und die Häckseltrommeln (20, 21) über Winkelgetriebe (9, 10) antreibt.

19. Häckselvorrichtung nach einem der Ansprüche 17 oder 18,
**dadurch gekennzeichnet,**
**dass** eine Schwenkeinrichtung (6, 7) vorgesehen ist, mittels der das Gehäuse (11) um die Antriebsachse (D) schwenkbar ist.

20. Häckselvorrichtung nach einem der vorangehenden Ansprüche,
**dadurch gekennzeichnet,**
**dass** zumindest eine Leitklappe (16, 17) vorgesehen ist, die die Menge des Häckselguts, die dem mindestens einen Einlass (12) zugeführt wird, steuert.

## Claims

1. Chopping device (3), comprising
a housing (11), having at least one inlet (12) and at least one outlet (13, 14) for chopped material,
at least one chopping drum (20, 21), which is accommodated rotatably in the housing (11) around a drum axis (T₁, T₂) arranged vertically or inclined relative to a vertical and formed conically upwards in a tapered manner in direction of the drum axis (T₁, T₂), as well as
chopper knives (23), which are arranged on the at least one chopping drum (20, 21) distributed along the circumference and along the height of the at least one chopping drum (20, 21),
wherein the housing (11) is formed at least partially adapted vertically upwards conically to the at least one chopping drum (20, 21),
**characterised in**
**that** the at least one outlet (13, 14) has an outlet opening (27, 28), which is separated into several partial outlet openings (29 - 36) merging in one another.

2. Chopping device according to claim 1,
**characterised in**
**that** the partial outlet openings (29-36) are arranged on top of each other and that the partial outlet openings (29-36) are arranged off-set to each other in circumferential direction relative to the drum axis (T₁, T₂) of the at least one chopping drum (20, 21).

3. Chopping device according to any one of the preceding claims,
**characterised in**
**that** an adjustable deflector plate (37, 38) for adjusting the lateral ejection direction of the chaff is assigned to each partial outlet opening (29-36).

4. Chopping device according to any one of the preceding claims,
**characterised in**
**that** the inlet (12) is formed such, that the material to be chopped is, relative to the height of the at least one chopping drum (20, 21), transported to at least a multitude of chopper knives (23), preferably to all.

5. Chopping device according to any one of the preceding claims,
**characterised in**
**that** two chopping drums (20, 21) are provided, which are arranged rotatably in the housing (11).

6. Chopping device according to claim 5,
**characterised in**
**that** the housing (11) has a partition wall (22) between the two chopping drums (20, 21).

7. Chopping device according to claim 6,
**characterised in**
**that** the partition wall (22) for partitioning the flow of material to be chopped to the two chopping drums (20, 21) is adjustable.

8. Chopping device according to any one of claims 5 to 7,
**characterised in**
**that** the inlet (12) extends over both chopping drums (20, 21).

9. Chopping device according to any one of the preceding claims,
**characterised in**
**that** one outlet (13, 14) is provided for each chopping drum (20, 21).

10. Chopping device according to any one of the preceding claims,
**characterised in**
**that** the at least one outlet (13, 14) extends across all chopper knives (23) relative to the height of the at least one chopping drum (20, 21).

11. Chopping device according to any one of the preceding claims,
**characterised in**
**that** the at least one chopping drum (20, 21) has a drum body (44), on which outer face, the chopper knives (23) are mounted.

12. Chopping device according to claim 11,
**characterised in**
**that** the drum body (33) has a polygonal cross-sectional profile.

13. Chopping device according to claim 12,
**characterised in**
**that** the chopper knives (23) are mounted on the drum body (44) by means of knife holders (47), wherein the knife holders (47) are arranged on edges (45) of the drum body (44), which are achieved because of the polygonal cross-sectional outline.

14. Chopping device according to any one of the preceding claims,
**characterised in**
**that** counter knives (24), which are arranged in a meshing manner with the chopper knives (23) of the at least one chopping drum (20, 21), are provided in the housing (11).

15. Chopping device according to any one of the preceding claims,
**characterised in**
**that** a separate driving motor is provided for the at least one chopping drum (20, 21).

16. Chopping device according to claim 15,
**characterised in**
**that** the driving motor is a hydraulic or electric motor.

17. Chopping device according to any one of the preceding claims,
**characterised in**
**that** two chopping drums (20, 21) are provided, which are arranged rotatably in the housing (11), and
**that** a drive shaft (8) is provided rotatably drivable around a horizontally arranged drive axis (D) driving the two chopping drums (20, 21).

18. Chopping device according to claim 17,
**characterised in**
**that** the drive shaft (8) is arranged above the chopping drums (20, 21) and the chopping drums (20, 21) are driven by bevel gears (9, 10).

19. Chopping device according to any one of claims 17 or 18,
**characterised in**
**that** a pivoting device (6, 7) is provided, by means of which the housing (11) is pivotable around the drive axis (D).

20. Chopping device according to any one of the preceding claims,
**characterised in**
**that** at least one deflector flap (16, 17) is provided which controls the amount of the material to be chopped delivered to the at least one inlet (12).

## Revendications

1. Hacheuse (3) comprenant
un carter (11) avec au moins une entrée (12) et au moins une sortie (13, 14) pour des produits à hacher, au moins un tambour hacheur (20, 21) qui dans le carter (11) est logé en étant rotatif autour d'un axe de tambour (T₁, T₂) vertical ou par rapport à un tel axe incliné par rapport à la verticale et qui en direction de l'axe de tambour (T₁, T₂) est conçu en se rétrécissant sous forme conique vers le haut, ainsi que
des lames hacheuses (23) qui sont placées sur l'au moins un tambour hacheur (20, 21), en étant distribuées autour de la circonférence ou sur la hauteur de l'au moins un tambour hacheur (20, 21),
le carter (11) étant conçu en se rétrécissant vers le haut, en adaptation au moins partielle à l'au moins un tambour hacheur (20, 21),
**caractérisée en ce que**
l'au moins une sortie (13, 14) comporte une ouverture de sortie (27, 28) qui est divisée en plusieurs ouvertures de sortie (29 à 36) partielles passant les unes dans les autres.

2. Hacheuse selon la revendication 1,
**caractérisée en ce que**
les ouvertures de sortie (29 à 36) partielles sont placées en superposition et **en ce qu'**en rapport à l'axe de tambour (T₁, T₂) de l'au moins un tambour hacheur (20, 21), les ouvertures de sortie (29 à 36) partielles sont placées en étant décalées dans le sens de la circonférence.

3. Hacheuse selon l'une quelconque des revendications précédentes,
**caractérisée en ce**
**qu'**à chaque ouverture de sortie (29 à 36) est associée une tôle de chicane (37, 38) réglable pour régler la direction d'éjection latérale du produit haché.

4. Hacheuse selon l'une quelconque des revendications précédentes,
**caractérisée en ce que**
l'entrée (12) est conçue de telle sorte qu'en rapport à la hauteur de l'au moins un tambour hacheur (20, 21), le produit à hacher soit amené vers au moins une pluralité de lames hacheuse (23), de préférence vers toutes.

5. Hacheuse selon l'une quelconque des revendications précédentes,
**caractérisée en ce que**
deux tambours hacheurs (20, 21) qui sont placés en rotation dans le carter (11) sont prévus.

6. Hacheuse selon la revendication 5,
**caractérisée en ce que**
le carter (11) comporte une paroi de séparation (22) entre les deux tambours hacheurs (20, 21).

7. Hacheuse selon la revendication 6,
**caractérisée en ce que**
la paroi de séparation (22) est réglable pour la distribution du flux de produit à hacher sur les deux tambours hacheurs (20, 21).

8. Hacheuse selon l'une quelconque des revendications 5 à 7,
**caractérisée en ce que**
l'entrée (12) chevauche les deux tambours hacheurs (20, 21).

9. Hacheuse selon l'une quelconque des revendications précédentes,
**caractérisée en ce**
**qu'**une entrée (13, 14) est prévue pour chaque tambour hacheur (20, 21).

10. Hacheuse selon l'une quelconque des revendications précédentes,
**caractérisée en ce**
**qu'**en rapport à la hauteur de l'au moins un tambour hacheur (20, 21), l'au moins une sortie (13, 14) s'étend par-dessus toutes les lames hacheuses (23).

11. Hacheuse selon l'une quelconque des revendications précédentes,
**caractérisée en ce que**
l'au moins un tambour hacheur (20, 21) comporte un corps de tambour (44) sur la face extérieure duquel sont fixées les lames hacheuses (23).

12. Hacheuse selon la revendication 11,
**caractérisée en ce que**
le corps de tambour (44) comporte une section transversale avec un profil polygonal.

13. Hacheuse selon la revendication 12,
**caractérisée en ce que**
les lames hacheuses (23) sont fixées' par l'intermédiaire de porte-lames (47) sur le corps de tambour (44), les porte-lames (47) étant placés sur des arêtes (45) du corps de tambour (44) qui résultent du profil polygonal de la section transversale.

14. Hacheuse selon l'une quelconque des revendications précédentes,
**caractérisée en ce que**
dans le carter (11) sont prévues des contre-lames (24) qui sont placées en s'engrenant dans les lames hacheuses (23) de l'au moins un tambour hacheur (20, 21).

15. Hacheuse selon l'une quelconque des revendications précédentes,
**caractérisée en ce**
**qu'**un moteur d'entraînement séparé est prévu pour l'au moins un tambour hacheur (20, 21).

16. Hacheuse selon la revendication 15,
**caractérisée en ce que**
le moteur d'entraînement est un moteur hydraulique ou électrique.

17. Hacheuse selon l'une quelconque des revendications précédentes,
**caractérisée en ce que**
deux tambours hacheurs (20, 21) qui sont placés en rotation dans le carter (11) sont prévus et
**en ce qu'**il est prévu un arbre d'entraînement (8) susceptible d'être entraîné en rotation autour d'un axe d'entraînement (D) placé à l'horizontale, par l'intermédiaire duquel les deux tambours hacheurs (20, 21) sont entraînés.

18. Hacheuse selon la revendication 17,
**caractérisée en ce que**
l'arbre d'entraînement (8) est placé au-dessus des tambours hacheurs (20, 21) et entraîne les tambours hacheurs (20, 21) par l'intermédiaire d'engrenages coniques (9, 10).

19. Hacheuse selon l'une quelconque des revendications 17 ou 18,
**caractérisée en ce**
**qu'**il est prévu un système de pivotement (6, 7), à l'aide duquel le carter (11) est susceptible de pivoter autour de l'axe d'entraînement (D).

20. Hacheuse selon l'une quelconque des revendications précédentes,
**caractérisée en ce**
**qu'**il est prévu au moins un clapet directeur (16, 17) qui commande la quantité de produit à hacher qui est amenée vers l'au moins une entrée (12).
